(19) **Europäisches Patentamt / European Patent Office / Office européen des brevets**

(11) **EP 2 599 759 A1**

(12) **EUROPEAN PATENT APPLICATION**

(43) Date of publication:
**05.06.2013 Bulletin 2013/23**

(51) Int Cl.:
***C04B 35/453*** *(2006.01)* ***H01C 7/112*** *(2006.01)*

(21) Application number: **12193101.8**

(22) Date of filing: **16.11.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **29.11.2011 TW 100143801**

(71) Applicants:
• **Lien, Ching-Hohn**
  **Guishan Shiang, Taoyuan County (TW)**

• **Zhu, Jie-An**
  **Guishan Shiang, Taoyuan County (TW)**

(72) Inventors:
• **Lien, Ching-Hohn**
  **Guishan Shiang, Taoyuan County (TW)**
• **Zhu, Jie-An**
  **Guishan Shiang, Taoyuan County (TW)**

(74) Representative: **Beck & Rössig**
  **European Patent Attorneys**
  **Cuvilliésstrasse 14**
  **81679 München (DE)**

(54) **Process for producing zinc oxide varistor having high potential gradient and high non-linearity coefficient**

(57)     A process for producing zinc oxide varistor is disclosed to allow that one step of having zinc oxide grains doped with non-equivalent ions and sufficiently semiconductorized and the other one step of preparing sintered powders having property of high-impedance are prepared by two separate procedures respectively, resulted in that the zinc oxide varistor produced by the process features both a high potential gradient and a high non-linearity coefficient; and more particularly the disclosed process is suited for producing a specific zinc oxide varistor whose potential gradient ranges from 2,000 to 9000 V/mm as well as non-linearity coefficient ($\alpha$) ranges from 21.5 to 55.

BDV（1mA）＝6.89KV;    0.1mA＝6.25KV; $\alpha$＝23.61877
$I_L$（80%）＝0.021mA（21μA）

FIG. 3

EP 2 599 759 A1

**Description**

**BACKGROUND OF THE INVENTION**

**1. Field of the Invention**

The present invention relates to a process for producing a zinc oxide varistor and, more particularly, to a process for producing a zinc oxide varistor having both a high potential gradient and a high non-linearity coefficient.

**2. Description of Prior Art**

Zinc oxide varistors (hereinafter referred to as ZnO varistors) due to having excellent surge-absorbing ability and superior non-ohmic characteristics are known as ideal overvoltage protectors, which are used as transient voltage suppressors in an electric power system or a circuit system to prevent transient surges and thereby protect system components.

However, as most countries in the world have planned to let one's own national power system toward extra high voltage (abbreviated as EHV) transmission system planning, new generation of ZnO varistor required for having both high potential gradient and high energy-absorbing abilities is absolutely imperative and becomes an important development trend.

To enhance the potential gradient and the energy withstand capability (or also called energy absorption capability) of ZnO varistors, known technical knowledge has suggested ZnO varistor is designed to reduce the ZnO grain size, lower the porosity, increase the number of grain boundaries and enhance the grain boundary barrier. Thus, the number of potential barriers per unit thickness of ZnO varistor becomes inversely proportional to the ZnO grain size so that the ZnO grain size and the number of grain boundaries to encapsulate the ZnO grains become important factors in determining the potential gradient of ZnO varistors.

From the known classical theories, a ZnO varistor has a breakdown voltage of approximately 3V per a single grain boundary among the ZnO grains thereof. The ZnO varistor has non-ohmic properties is resulted from the Double Schottky Barrier happened within every two ZnO grains. To have the Double Schottky Barrier enhanced more higher is to have ZnO varistors provided with more excellent properties in both non-linearity coefficient ($\alpha$) and the breakdown voltage.

ZnO varistors if formulated with traditional formulas and prepared by conventional techniques have potential gradients of from about 180 to about 200 V/mm only, with energy withstand capabilities ranging from about 100 to about 140 J/cm3. Therefore, the conventional ZnO varistors are not suited for use in EHV transmission systems.

For improvement of ZnO varistors having high potential gradients, currently applicable methods generally resort to the following two approaches:

1. Rare-earth oxides are added as a source of doping ions for ZnO grains, resulted in that the produced ZnO varistors have potential gradients up to 400 V/mm.
2. Improved manufacturing methods for preparing zinc oxide ceramic powder more available use in producing ZnO varistors are made, or new techniques (e.g., high-energy ball milling and nano pulverization) are introduced, resulted in that the produced ZnO varistors have potential gradients of about 2,000 V/mm.

Nevertheless, the aforesaid approaches to increasing the potential gradient of ZnO varistors have a common drawback, i.e., once the potential gradient of the ZnO varistors is increased, the non-linearity coefficient ($\alpha$) of the varistors is inevitably lowered down. This negative phenomenon leads to the ZnO varistors unfavorable in voltage-limiting effect and still unavailable use in EHV transmission systems.

**SUMMARY OF THE INVENTION**

In view of the above, the primary object of the present invention is to provide a process for producing a zinc oxide varistor having both a high potential gradient and a high non-linearity coefficient, which process basically includes steps of:

a) individually advanced preparation of doped ZnO grains sufficiently semiconductorized;
b) individually advanced preparation of a desired high-impedance sintering components which are availably served as grain boundaries to encapsulate the doped ZnO grains;
c) mixing the doped ZnO grains with the selected grain boundary components evenly; and
d) performing a sintering process to produce a ZnO varistors having both a high potential gradient and a high non-linearity coefficient.

The process for producing a ZnO varistor of the present invention is different from the conventional ones mainly in that the doped ZnO grains sufficiently semiconductorized and the high-impedance sintering components (e.g. sintered powder or glass powder) are prepared by two separate procedures respectively. By doing so, not only the produced ZnO varistors have the following unexpected advantages, but also the produced ZnO varistors have both an ultrahigh potential gradient as well as an ultrahigh non-linearity coefficient to overcome the unfavorable limitations of ZnO varistors mentioned above if produced by conventional methods for making a ZnO varistor:

1. to have the Double Schottky Barrier enhanced more higher once happened among ZnO grains;
2. to have the number of grain boundaries deposited per unit thickness of ZnO varistor increased more greater among the ZnO grains; and
3. to have ZnO varistor increased more excellent in material composition uniformity and structural uniformity.

## BRIEF DESCRIPTION OF THE DRAWINGS

The present invention will be best understood by referring to the following detailed description in conjunction with the accompanying drawings, in which:

FIG. 1 is an X-ray diffractogram of the ZnO* grains of sample 8 in embodiment 4;
FIG. 2 is an X-ray diffractogram of the ZnO* grains of sample 9 in embodiment 4;
FIG. 3 is an I-V diagram of a disc-shaped zinc oxide varistor of sample 8 in embodiment 4;
FIG. 4 is an I-V diagram of a disc-shaped zinc oxide varistor of sample 9 in embodiment 4;
FIG. 5 is a sectional SEM photograph of a disc-shaped zinc oxide varistor made of undoped ZnO grains in embodiment 8; and
FIG. 6 is a sectional SEM photograph of a disc-shaped zinc oxide varistor made of doped ZnO* grains in embodiment 8.

## DETAILED DESCRIPTION OF THE PREFERRED EMBODIMENT

The present invention discloses a process for producing a zinc oxide varistor. The invented process of the present invention is suitable for producing a zinc oxide varistor having an ultrahigh potential gradient as well as an ultrahigh non-linearity coefficient. Preferably, the invented process is suited for use in producing a zinc oxide varistor having a potential gradient ranging from 1,200 to 9,000 V/mm, a non-linearity coefficient ($\alpha$) ranging from 21.5 to 55 and a leak current ($I_L$) ranging from 1 to 21 $\mu$A. More preferably, the invented process is suited for use in producing a zinc oxide varistor whose potential gradient exceeds 2,000 V/mm.
The process disclosed herein for producing a zinc oxide varistor includes the following steps:

a) individually advanced preparation of ZnO grains doped with non-equivalent ions required to preset a zinc oxide varistor if produced having a desired potential gradient ranged from 1200 to 9000 V/mm;
b) individually advanced preparation of sintered powders (or called glass powders) required to preset a zinc oxide varistor if produced having a desired potential gradient ranged from 1200 to 9000 V/mm;
c) preparing ground ceramic powders for making the ZnO varistors by calcining a slurry mixture of mixing the doped ZnO grains of step a) in a specific ratio with the glass powders of step b) and grounding the calcined ceramic powers into desired fineness; and
d) performing a sintering process to the ground ceramic powders of step c) to produce ZnO varistors having an ultrahigh potential gradient ranging from 1200 to 9000 V/mm and an ultrahigh non-linearity coefficient ($\alpha$) ranging from 21.5 to 55.

In step a) of the disclosed process of the present invention, non-equivalent ions are doped into ZnO grains by substituting Zn2+ ions or occupying interstitial sites. This serves to suppress the growth of ZnO grains during a subsequent sintering process, and to allow the ZnO grains to be sufficiently semiconductorized.
According to the principle of crystallography, the non-equivalent ions to be doped with the ZnO grains may be ions of at least one element selected from the group consisting of lithium (Li), copper (Cu), aluminum (Al), cerium (Ce), cobalt (Co), chromium (Cr), indium (In), gallium (Ga), molybdenum (Mo), manganese (Mn), niobium (Nb), lanthanum (La), yttrium (Y), praseodymium (Pr), antimony (Sb), nickel (Ni), titanium (Ti), vanadium (V), tungsten (W), zirconium (Zr), iron (Fe), boron (B), silicon (Si) and tin (Sn). The amount of the non-equivalent ions doped with ZnO grains may vary according to practical needs and is less than 20 mol% of the zinc oxide.

Either of the following two methods can be used to prepare ZnO grains doped with non-equivalent ions:

Method 1:

Soluble salts containing the ions to be doped are selected according to the specified properties of the ZnO varistor, and an aqueous solution of a specific concentration is prepared from the salts. The solution is added with ZnO powder, stirred, oven-dried, and calcined at 950-1,550°C. The calcined material thus obtained is broken up and ground to a desired fineness for later use.

Method 2:

ZnO grains doped with the desired ions are prepared by a physical or chemical nanotechnology-based method for preparing a fine powder, depending on the specified properties of the ZnO varistor. Suitable physical methods include, for example, vapor deposition, the laser method, and the microwave method. Suitable chemical methods include precipitation, the microemulsion method, hydrothermal treatment, phase transfer, the sol-gel method, and so on.

Chemical precipitation can be carried out in the following manner. A solution containing zinc ions and a solution containing the doping ions are mixed and stirred to produce an evenly mixed solution containing both zinc ions and the doping ions. Under a stirring condition, a precipitation agent is added into the mixed solution by forward or backward addition. Once the pH value is controlled at the appropriate level, the co-precipitate is taken out, washed for several times, oven-dried, and calcined at a proper temperature. Thus, zinc oxide crystal grains containing the doping ions are obtained.

The precipitation agent can be selected from oxalic acid, urea, ammonium carbonate, ammonium bicarbonate, ammonia water, ethanolamine, and other alkaline solutions. The calcination temperature depends on the decomposition temperature of the co-precipitate.

If the sol-gel method is used, zinc ions are evenly dispersed in a sol of an inorganic salt or a metal alkoxide containing the desired doping ions. After hydrolysis and a condensation and polymerization reaction, the sol becomes a gel. The gel is cured and subjected to a heat treatment to produce zinc oxide crystal grains doped with non-equivalent ions.

ZnO grains obtained by the above two nanotechnology-based preparation techniques have a small particle size and feature a highly uniform distribution of the doping ions. Moreover, with a relatively low heat-treatment temperate ranging from 350°C to 1,000°C, the two preparation techniques are suitable for mass production.

In the process of the present invention, steps a) and b) are two independent and different procedures. Step b) is used to prepare sintered powders (also known to be sintered as grain boundary component) whose composition may vary according to the specified properties of the ZnO varistor.

The sintered powders required for having property of high impedance can be prepared by the following two methods:

Method 1:

According to the specified performance of the ZnO varistor, an oxide or oxides, a hydroxide or hydroxides, a carbonate or carbonates, a nitrate or nitrates, or an oxalate or oxalates of at least one element selected from the group consisting of the following is used as the starting material: bismuth (Bi), antimony (Sb), manganese (Mn), cobalt (Co), chromium (Cr), nickel (Ni), titanium (Ti), silicon (Si), barium (Ba), boron (B), selenium (Se), lanthanum (La), praseodymium (Pr), yttrium (Y), indium (In), aluminum (Al) and tin (Sn). Once sufficiently mixed, the starting material becomes the base of a sintered material of the desired composition. The base is sintered and ground to the desired fineness to produce a high-impedance sintered powder. Alternatively, the sufficiently mixed starting material is melted at high temperature, water-quenched, oven-dried, and then ground into a sintered powder.

For instance, the starting material of the aforesaid sintered material is a mixture of at least two oxides selected from the group consisting of bismuth trioxide ($Bi_2O_3$), boron trioxide ($B_2O_3$), antimony trioxide ($Sb_2O_3$), cobalt trioxide ($Co_2O_3$), manganese dioxide ($MnO_2$), chromium trioxide ($Cr_2O_3$), vanadium trioxide ($V_2O_3$), zinc oxide (ZnO), nickel oxide (NiO), silicon dioxide ($SiO_2$), and a rare-earth oxide. The purpose of adding extra zinc oxide (ZnO) into the sintered powder is to enhance sintering effect between grain boundaries.

Method 2:

Nanoparticles having the specified components are prepared by a physical or chemical nanotechnology-based method according to the specified properties of the zinc oxide varistor. Preferably, chemical precipitation, the microemulsion method, or the sol-gel method is used in the present invention to prepare high-impedance nanoparticles. By using a suitable physical or chemical nanotechnology-based method, a sintered powder featuring a uniform distribution of its components and a small particle size can be obtained.

In step c) of the process of the present invention disclosed herein is performed as follows. The high-impedance sintered powder prepared in step b) is added with water to produce a slurry treatment. Then, under a stirring condition, the ZnO grains doped with non-equivalent ions as prepared in step a) are added to the slurry in a specific ratio. The resultant mixture is sufficiently stirred, oven-dried, calcined, and ground to produce a ceramic powder for making the zinc oxide varistor.

The ratio by weight of the doped ZnO grains of step a) to the sintered powders of step b) ranges from 100:2 to 100:50, preferably from 100:10 to 100:30.

In step d) of the disclosed method, the zinc oxide varistor is made by a conventional method which includes: having ground ceramic powders of step c) mixed with appropriate binder to form an organic slurry; forming a layer of green film made from the organic slurry by doctor blade technique; printing two or more layers of interlaced inner electrodes; calcining green film chips having the inner electrodes; and then plating the two exposed ends of the inner electrodes of each chip with external electrodes. Thus, a disc-shaped or multilayer zinc oxide varistor is obtained.

The disclosed process for producing a ZnO varistor has the following advantageous effects:

1. The height of the Schottky barrier among ZnO grains is increased

As step a) of the disclosed process is an independent procedure, the process of doping ZnO grains with non-equivalent ions is no longer subject to limitations imposed by the selected high-impedance grain boundary component. In addition, the advantages listed below increase the height of the Schottky barrier among ZnO grains, such that the resultant ZnO varistor has an ultrahigh potential gradient and an ultrahigh non-linearity coefficient.

   1) The range of eligible doping ions is broadened:

   Now that the ZnO grains can be doped without being limited by the high-impedance grain boundary component, the variety of non-equivalent ions that can be doped into the ZnO grains is significantly enhanced.

   2) The doping amount of the non-equivalent ions is increased:

   As the ZnO grains can create the optimal ion doping conditions for the doping of non-equivalent ions, the amount of the non-equivalent ions that are doped into the

ZnO grains will be greatly increased.

2. The number of grain boundaries deposited per unit thickness of ZnO varistor is more increased among the ZnO grains:

According to the process of the present invention, the composition of grain boundary component can be adjusted to suppress the growth of ZnO grains, or an ultrafine grinding technique can be used to reduce the particle size of ZnO grains, or nanoscale ZnO grains can be used. All of the above contributes to increase the number of ZnO grains and the number of grain boundaries deposited per unit thickness of ZnO varistor, so that the resultant ZnO varistor produced is then provided with an ultrahigh potential gradient and a superior non-ohmic property.

3. The grain boundary component deposited among ZnO grains to encapsulate the ZnO grains is enhanced to increase uniformity and structural strength more and more excellent and stronger.

Step b) of the disclosed process is an independent procedure whereby the grain boundary component is made into nanoparticles each having substantially the same composition. More importantly, by grinding and calcining the grain boundary component (which includes $Bi_2O_3$) or by synthesizing the grain boundary component (which includes $Bi_2O_3$ and other selected ingredients) using a suitable nanotechnology-based method, the composition of each nanoparticle is rendered similar and contains $Bi_2O_3$. During the sintering process, the almost identical structure of the grain boundary component helps bring down the solubility of zinc oxide in fused masses of $Bi_2O_3$, lower the growth of ZnO grains, and prevent the particle size of the ZnO grains from increasing. Therefore, as the number of ZnO grains and the number of grain boundaries deposited per unit thickness of ZnO varistor are increased, the resultant ZnO varistor has a potential gradient ranging from 1,200 to 9,000 V/mm, preferably from 2,000 to 9,000 V/mm, a non-linearity coefficient ($\alpha$) ranging from 21.5 to 55 and a leak current ($I_L$) ranging from 1 to 21 $\mu$A.

Embodiment 1:

A sintered powder coded G1-10 is prepared by chemical precipitation and has the compositions based on 1 mol% of ZnO as provided below.

| G1-10 | $Bi_2O_3$ | $MnO_2$ | $Co_2O_3$ | $Sb_2O_3$ | $Y_2O_3$ | $Ce_2O_3$ | $SiO_2$ | $B_2O_3$ |
|---|---|---|---|---|---|---|---|---|
| Component (mol%) | 1.50 | 1.00 | 1.00 | 1.00 | 0.003 | 0.003 | 0.50 | 0.005 |

Doped ZnO* grains are prepared by soaking zinc oxide in a solution containing the doping ions based on 1 mol% of ZnO as provided below.

| Ions doped | Sn | Si | B | Al |
|---|---|---|---|---|
| Ratio (mol%) | 0.60 | 0.10 | 1.00 | 0.015 |

After the doped ZnO* grains are evenly mixed with the sintered powder G1-10, the mixture is pressed at a pressure of 1000 kg/cm$^2$ to form discs each having a diameter of 8.4 mm. The discs are sintered at 920°C for eight hours. Then, the sintering of surface silver electrodes is completed at 800°C to form disc-shaped zinc oxide varistors. As the foregoing ion doping process uses three different sets of calcination conditions separately, i.e., calcining at 950°C for two hours, 1250°C for two hours, and 1550°C for two hours respectively, three types of zinc oxide varistors are produced, whose performances are listed in Table 1. All zinc oxide varistors produced have potential gradients higher than 1,200 V/mm, a non-linearity coefficient ($\alpha$) ranging from 45.6 to 53.2 and a leak current ($I_L$) ranging from 1.2 to 5.3 $\mu$A.

Table 1

| Calcination temperature (°C) | Breakdown voltage BDV (V/mm) | Non-linearity coefficient ($\alpha$) | Leak current $I_L$ ($\mu$A) |
|---|---|---|---|
| 950 | 1211 | 45.6 | 5.3 |
| 1250 | 1370 | 51.1 | 1.5 |
| 1550 | 1480 | 53.2 | 1.2 |

Embodiment 2:

A sintered powder coded G1-00 is prepared by chemical precipitation and has the compositions by weight as provided below.

| G1-00 | ZnO | $SiO_2$ | $B_2O_3$ | $Bi_2O_3$ | $Co_2O_3$ | $MnO_2$ | $Cr_2O_3$ |
|---|---|---|---|---|---|---|---|
| Component (wt%) | 8 | 23 | 19 | 27 | 8 | 8 | 7 |

The doped ZnO* grains listed in Table 2 are prepared by chemical co-precipitation and each ZnO grain doped with 1 mol% indium (In) ions. Each sample of doped ZnO* grains listed in Table 2 is evenly mixed with the sintered powder G1-00, and the ratio by weight of the former to the latter is 100:10 or 100:15 or 100:30 respectively.

Next, the mixture is pressed at a pressure of 1000 kg/cm$^2$ to form discs, which are subsequently sintered at 1065°C for two hours. Once the coating of silver electrodes is completed at 800°C, disc-shaped zinc oxide varistors are obtained. The test results of the performances of the different types of zinc oxide varistors are shown in Table 2.

Table 2

| sample | Composition | BDV (V/mm) | $\alpha$ | $I_L$ ($\mu$A) | Clamp (pF) |
|---|---|---|---|---|---|
| 1 | Zn-In + 10% G1-00 | 1,726 | 24.3 | 13 | 44 |
| 2 | Zn-In + 15% G1-00 | 2,107 | 23.5 | 15 | 43 |
| 3 | Zn-In + 30% G1-00 | 2,229 | 21.8 | 23 | 36 |

From Table 2, when the doped ZnO* grains are doped with the same kinds of doping ions, the potential gradient (or called breakdown voltage (BDV)) of the resultant ZnO varistors varies with the ratio of the doped ZnO* grains to the sintered powder. Therefore, by controlling the kinds of the doping ions doped with ZnO grains or by adjusting the ratio of the doped ZnO* grains to the sintered powder, a produced ZnO varistor having a potential gradient higher than 1,700 V/mm, even higher than 2,000 V/mm, is achievable.

Embodiment 3:

The sintered powder G1-10 prepared in Embodiment 1 is used, and doped ZnO* grains are prepared by soaking zinc oxide in a solution containing the doping ions. The ion doping process is conducted at a calcination temperature of 950°C for two hours, and the kinds and ratios of the doping ions based on 1 mol% of ZnO are listed in Table 3.

Table 3

| Ions doped (mol%) Sample | Sn | Si | B | Al | In | Y | Sb |
|---|---|---|---|---|---|---|---|
| 4 | 0.6 | 0.1 | 1.0 | 0.015 | - | - | - |
| 5 | 0.6 | 0.1 | 1.0 | 0.015 | 1.0 | - | - |
| 6 | 0.6 | 0.1 | 1.0 | 0.015 | 1.5 | 0.5 | 0.5 |
| 7 | 0.6 | 0.1 | 1.0 | 0.015 | 3.0 | 0.75 | 0.75 |

As in embodiment 1, disc-shaped zinc oxide varistors are made, and the test results of their performances are listed in Table 4.

From Table 4, the zinc oxide varistors of samples 4 through 7 all have potential gradients higher than 1,200 V/mm, non-linearity coefficients $\alpha$ ranging from 27.41 to 52.9 and leak currents $I_L$ ranging from 1.6 to 16.5 $\mu$A.

In particular, the zinc oxide varistor of sample 7 has a potential gradient as high as 6,023 V/mm.

Table 4

| sample | BDV (V/mm) | $\alpha$ | $I_L$ ($\mu$A) |
|---|---|---|---|
| 4 | 1,211 | 45.6 | 5.3 |
| 5 | 2,026 | 52.9 | 1.8 |
| 6 | 3,987 | 33.97 | 1.6 |
| 7 | 6,023 | 27.41 | 16.5 |

Embodiment 4:

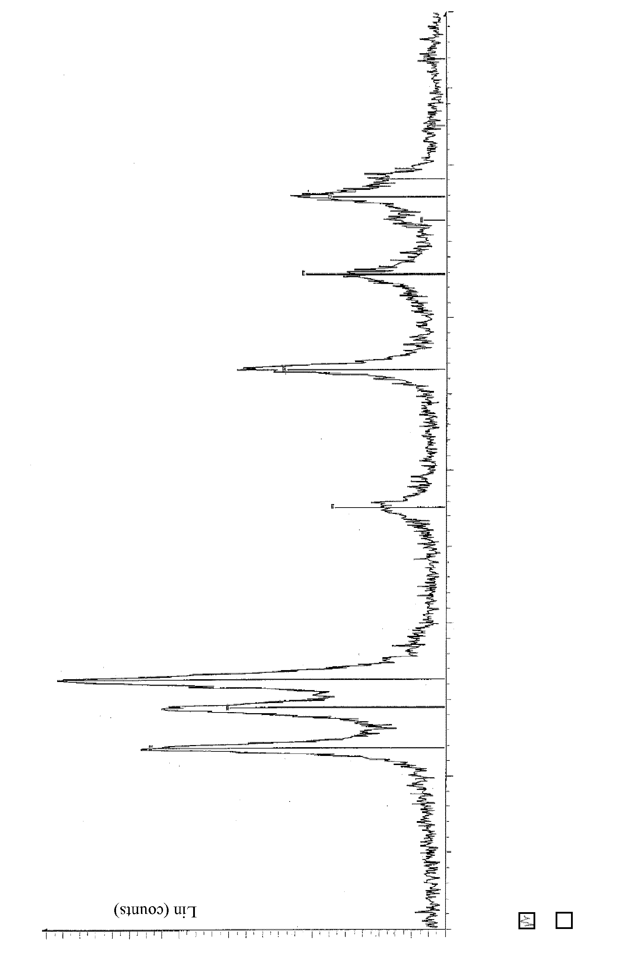

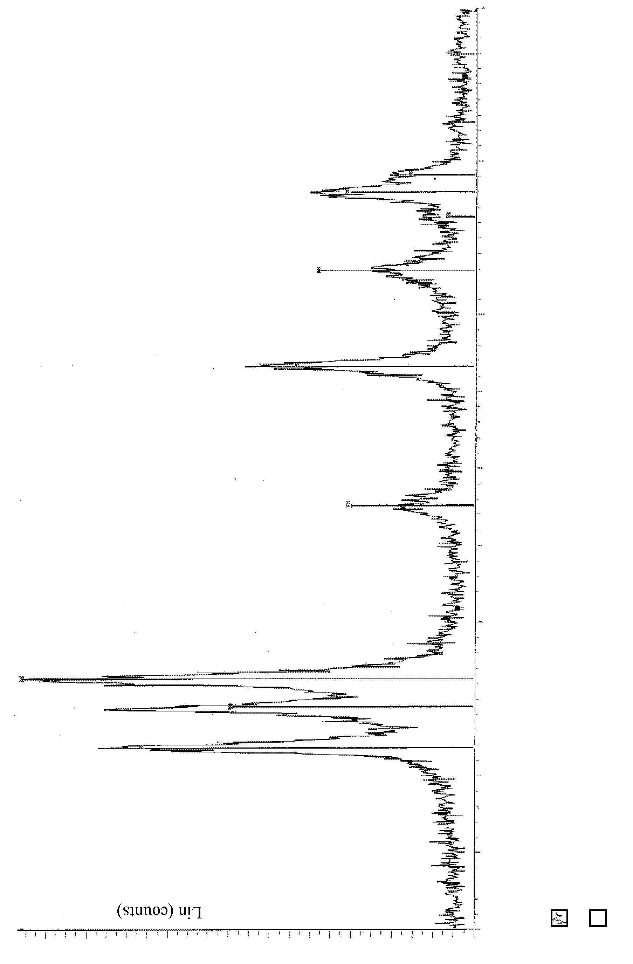

The sintered powder G1-10 prepared in Embodiment 1 is used, and doped ZnO* grains are prepared by the sol-gel method. The ion doping process is carried out at a calcination temperature of 350°C for three hours. The kinds and ratios of the doping ions are the same as those of samples 6 and 7 in embodiment 3; hence, the corresponding samples in this embodiment are identified as samples 8 and 9 respectively, with FIGS. 1 and 2 showing their respective X-ray diffractograms. By comparing the X-ray diffractograms of the doped ZnO* grains with the standard X-ray diffractograms of ZnO, it is known that ZnO grains are indeed formed at such a low calcination temperature.

Disc-shaped zinc oxide varistors are made in the same way as in embodiment 1, and their performances are listed in Table 5.

Table 5

| sample | BDV (V/mm) | $\alpha$ | $I_L$ ($\mu$A) |
|---|---|---|---|
| 8 | 6,890 | 23.62 | 21 |
| 9 | 9,350 | 21.50 | 16 |

It should be pointed out that breakdown voltage (BDV) if higher than 6,500 V/mm is beyond the measuring range of the testing instrument. Therefore, I-V curves are plotted, and the values of $V_1$ ($I_1$=0.1mA) and $V_2$ ($I_2$=1.0mA) are substituted into the following equation (I) to calculate the non-linearity coefficients $\alpha$.

$$(I) \qquad \alpha = 1 / \log(V_2/V_1).$$

The leak currents $I_L$ are obtained by taking the current at 80% of breakdown voltage (BDV), as is typically the case.

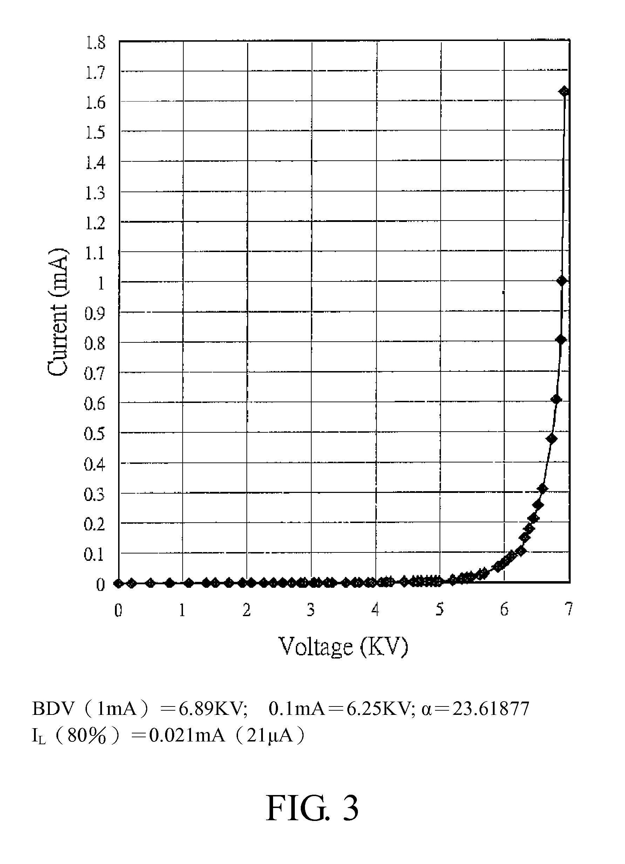

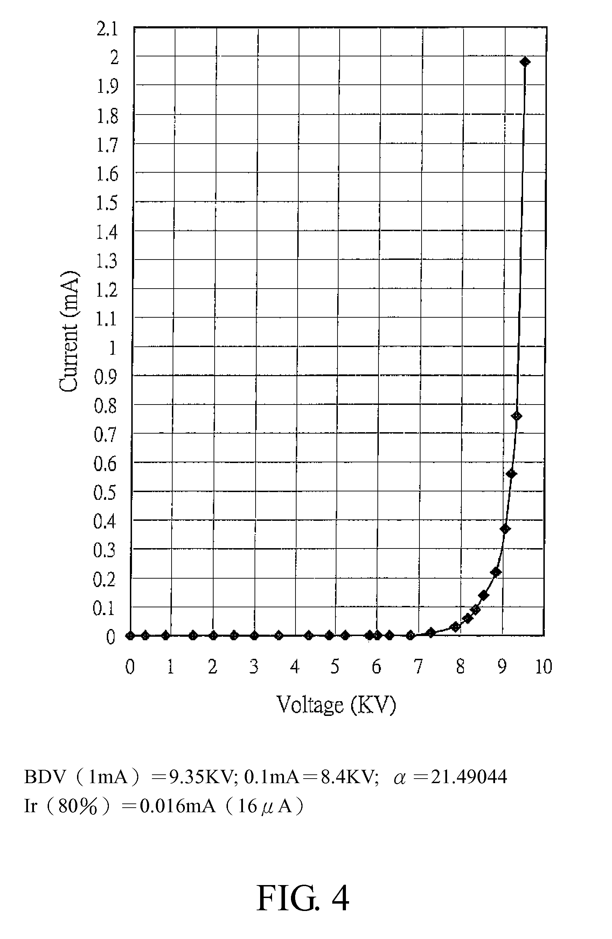

The I-V curves of the disc-shaped zinc oxide varistors of samples 8 and 9 are shown in FIGS. 3 and 4 respectively.

According to the I-V curves, the potential gradients of the zinc oxide varistors of both samples 8 and 9 exceed 6,800 V/mm. In particular, the zinc oxide varistor of sample 9 has a potential gradient higher than 9,000 V/mm, a non-linearity coefficient $\alpha$ as high as 21.50, and a leak currents $I_L$ lower than 16 $\mu$A.

Embodiment 5:

The doped ZnO* grain in embodiment 1 which is doped at the calcination temperature of 1,250°C is evenly mixed with the sintered powder G1-10 in embodiment 1. The mixture is passed through a planetary grinding machine to produce three types of ceramic powder samples whose average particle sizes are 2.1 $\mu$m, 1.1 $\mu$m, and 0.56 $\mu$m respectively. Disc-shaped zinc oxide varistors are made as in embodiment 1, and their performances are listed in Table 6.

Table 6

| Particle size ($\mu$m) | BDV (V/mm) | $\alpha$ | $I_L$ ($\mu$A) |
|---|---|---|---|
| 2.1 | 855 | 46.9 | 1.3 |
| 1.1 | 1,370 | 51.1 | 1.5 |
| 0.56 | 1,668 | 55.0 | 1.75 |

As shown in Table 6, when the zinc oxide ceramic powder has a particle size equal to or less than 1.1 $\mu$m, the resultant zinc oxide varistor has a potential gradient higher than 1,200 V/mm. Hence, this embodiment demonstrates that the potential gradient of a zinc oxide varistor can be increased by increasing the fineness of the zinc oxide ceramic powder of which the varistor is made.

Embodiment 6:

The zinc oxide ceramic powder of sample 5 in embodiment 3 is used to make 2220-type and 1210-type multilayer varistors by a conventional method for making the same, in which the sintering process is performed at 900°C for eight hours. The electric properties of the resultant varistors are listed in Table 7.

Table 7

| Specification of sample | BDV (V/mm) | $\alpha$ | $I_L$ ($\mu$A) | Current capacity (A) |
|---|---|---|---|---|
| 2220ML100 | 2,040 | 35.7 | 5.3 | 2700 |
| 1210ML100 | 2,123 | 38.4 | 1.0 | 760 |

As shown in Table 7, both the 2220ML100 and 1210ML100 multilayer varistors have potential gradients higher than 2,000 V/mm and non-linearity coefficients ($\alpha$) higher than 35.

Embodiment 7:

The zinc oxide ceramic powder of sample 6 in embodiment 3 is used to make 2220-type and 1210-type multilayer varistors by a conventional method for making the same, in which the sintering process is performed at 900°C for eight hours. The electric properties of the resultant varistors are listed in Table 8.

Table 8

| Specification of sample | BDV (V/mm) | $\alpha$ | $I_L$ ($\mu$A) |
|---|---|---|---|
| 2220ML390 | 3,998 | 44.1 | 0.8 |
| 1210ML390 | 4,028 | 45.5 | 0.7 |

As shown in Table 8, the 2220ML390 and 1210ML390 multilayer varistors have potential gradients of about 4,000 V/mm and non-linearity coefficients ($\alpha$) exceeding 44.
Embodiments 6 and 7 demonstrate that the process of the present invention is also suited for making a multilayer varistor having both a high potential gradient and non-linear properties.

Embodiment 8:

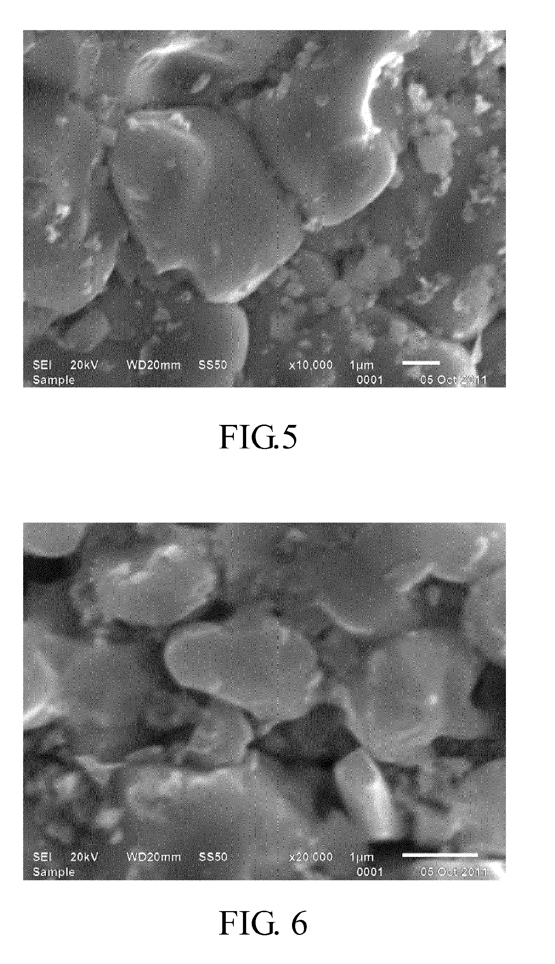

In a way similar to embodiment 1, the sintered powder G1-10 is used with either undoped ZnO grains or doped ZnO* grains to produce disc-shaped zinc oxide varistors. The performances of the resultant varistors are listed in Table 9. FIGS. 5 and 6 show sectional photographs taken of the disc samples with a scanning electron microscope (SEM).

Table 9

| varistors made of zinc oxide used | BDV (V/mm) | $\alpha$ | $I_L$ ($\mu$A) |
|---|---|---|---|
| undoped ZnO grains | 324 | 41.5 | 1.5 |
| doped ZnO* grains | 1,370 | 51.1 | 1.5 |

Based on the sectional SEM photographs, the average particle size of undoped ZnO grainss in the undoped disc sample is measured and calculated as 5.2 $\mu$m, and the average particle size of the doped ZnO* grains in the doped disc sample is 2.2 $\mu$m, the former particle size being 2.4 times the latter.
Since the two samples are sintered under the same conditions, the zinc oxide particle size of the undoped sample is 2.4 times that of the doped sample. This indicates that the doped zinc oxide can effectively suppress the growth of zinc oxide grains during the sintering process.
In addition, according to the equations for calculating the potential gradient was proportioned to the number of zinc oxide grains in per unit thickness, the potential gradient of the doped zinc oxide disc should have been 777.6 V/mm (i.e., 324 V/mm times 2.4 equals 777.6 V/mm), and yet the actual test result is 1,370 V/mm. The increase of 592.4 V/mm (i.e., 1370 V/mm minus 777.6 V/mm equals 592.4 V/mm) can be attributed to the doping of ions, which increases the height of the Schottky barrier at the zinc oxide grain boundary. By the same token, the doped zinc oxide varistor has the higher non-linearity coefficient.

Embodiment 9:

Disc-shaped zinc oxide varistors are made of the sintered powder G1-10 in embodiment 1 and the doped ZnO* of each of samples 6 and 7 in embodiment 3. The leak currents of the resultant zinc oxide varistors used at different temperatures respectively are listed in Table 10.

Table 10

| Temperature / Sample | Sample 6 | Sample 7 |
|---|---|---|
| | Leak current $I_L$ (μA) | |
| 25°C | 1.3 | 0.3 |
| 85°C | 1.0 | 0.7 |
| 125°C | 0.7 | 1.4 |
| 150°C | 1.6 | 1.8 |
| 175°C | 3.6 | 2.2 |
| 200°C | 11.2 | 8.1 |

Embodiment 9 demonstrate that the process of the present invention is also suited for making a zinc oxide varistor applicable to operation where the operating temperature is ranging from 25°C to 200°C.

**Claims**

1.  A process for producing a zinc oxide varistor suited for use in producing a specific zinc oxide varistor having a potential gradient ranging from 2,000 to 9,000 V/mm, a non-linearity coefficient $\alpha$ ranging from 21.5 to 55 and a leak current $I_L$ ranging from 1 to 21 μA, comprising the steps of:

    a) individually advanced preparation of zinc oxide grains doped with non-equivalent ions according to a preset potential gradient of the specific zinc oxide varistor ranging from 2,000 to 9,000 V/mm, wherein the non-equivalent ions doped to the zinc oxide grains are of at least an element selected from the group consisting of lithium (Li), copper (Cu), aluminum (Al), cerium (Ce), cobalt (Co), chromium (Cr), indium (In), gallium (Ga), molybdenum (Mo), manganese (Mn), niobium (Nb), lanthanum (La), yttrium (Y), praseodymium (Pr), antimony (Sb), nickel (Ni), titanium (Ti), vanadium (V), tungsten (W), zirconium (Zr), iron (Fe), boron (B), silicon (Si) and tin (Sn);
    b) individually advanced preparation of sintered powders according to the preset potential gradient of the specific zinc oxide varistor ranging from 2,000 to 9,000 V/mm, wherein the sintered powder is prepared by:

    b-1) providing a starting material, wherein the starting material being an oxide or oxides, a hydroxide or hydroxides, a carbonate or carbonates, a nitrate or nitrates, or an oxalate or oxalates of at least an element selected from the group consisting of bismuth (Bi), antimony (Sb), manganese (Mn), cobalt (Co), chromium (Cr), nickel (Ni), titanium (Ti), silicon (Si), barium (Ba), boron (B), selenium (Se), lanthanum (La), praseodymium (Pr), yttrium (Y), indium (In), aluminum (Al) and tin (Sn);
    b-2) mixing the starting material(s) selected from step b-1);
    b-3) sintering the mixture obtained at step b-2) into sintered powders; and
    b-4) grinding sintered powders obtained at step b-3) to a desired fineness;

    c) mixing the zinc oxide grains doped with non-equivalent ions of step a) and the sintered powders of step b) in a specific ratio to produce a ceramic powder for making the zinc oxide varistor; and
    d) producing a disc-shaped or multilayer zinc oxide varistor made from the ceramic powder of step c), wherein the zinc oxide varistor is satisfied requirement of having potential gradient ranging from 2,000 to 9000 V/mm, non-linearity coefficient ($\alpha$) ranging from 21.5 to 55 and leak current $I_L$ ranging from 1 to 21 μA.

2.  The process of claim 1, wherein in the step a) the non-equivalent ions are doped into zinc oxide grains by:

    a-1) preparing a solution containing the non-equivalent ions to be doped;

a-2) soaking the zinc oxide grains in the solution;

a-3) oven-drying the obtained zinc oxide grains doped with non-equivalent ions of step a-2);

a-4) calcining the doped zinc oxide grains after finish of oven-dryed at step a-3) at a calcination temperature ranging from 950°C to 1,550°C; and

a-5) grinding the doped zinc oxide grains to a desired fineness after calcined at step a-4).

3. The process of claim 1, wherein in the step a), the non-equivalent ions are doped into zinc oxide by:

a-1) obtaining a co-precipitate from a solution containing the non-equivalent ions to be doped and a soluble zinc salt;

a-2) washing and oven-drying the co-precipitate; and

a-3) calcining the oven-dried co-precipitate at a calcination temperature ranging from 350°C to 1,000°C to produce the doped zinc oxide grains.

4. The process of claim 1, wherein in the step a), the non-equivalent ions are doped into zinc oxide by a sol-gel method comprising:

a-1) dispersing zinc ions evenly in a sol of an inorganic salt or a metal alkoxide containing the non-equivalent ions to be doped;

a-2) conducting hydrolysis, condensation, and polymerization on the sol to produce a gel;

a-3) curing the gel; and

a-4) calcining the cured material obtained from step a-3) at a calcination temperature ranging from 350°C to 1000°C, to produce doped zinc oxide crystal grains.

5. The process of one of claims 1 to 3, wherein the sintered powder of step b) is prepared from a combination of at least one selected from the group consisting of $Bi_2O_3$, $Sb_2O_3$, $CoO$, $MnO$, $ZnO$, $Cr_2O_3$, $TiO_2$, $SiO_2$, $B_2O_3$, $Pr_2O_3$, $Y_2O_3$ and $La_2O_3$.

6. The method of one of claims 1 to 5, wherein the sintered powder of step b) is prepared by:

b-1) preparing a solution of the starting material; and

b-2) applying nanotechnology-based chemical precipitation, a microemulsion method, or a sol-gel method to produce a nano-size sintered powder.

7. The process of one of claims 1 to 6, wherein in step c) the zinc oxide grains of step a) and the sintered powder of step b) are mixed in a ratio by weight of 100:2-100:50 respectively.

BDV（1mA）＝6.89KV;　0.1mA＝6.25KV; α＝23.61877
$I_L$（80%）＝0.021mA（21μA）

# FIG. 3

BDV（1mA）＝9.35KV; 0.1mA＝8.4KV; $\alpha$＝21.49044
Ir（80%）＝0.016mA（16$\mu$A）

FIG. 4

FIG.5

FIG. 6

Europäisches
Patentamt

European
Patent Office

Office européen
des brevets

# EUROPEAN SEARCH REPORT

Application Number

EP 12 19 3101

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 276 042 A2 (SFI ELECTRONICS TECHNOLOGY INC [TW]) 19 January 2011 (2011-01-19) * the whole document * ----- | 1-7 | INV. C04B35/453 H01C7/112 |
| X | LIU H ET AL: "Microstructure and electrical properties of Y2O3-doped ZnO-based varistor ceramics prepared by high-energy ball milling", JOURNAL OF UNIVERSITY OF SCIENCE AND TECHNOLOGY BEIJING, MINERAL, METALLURGY, MATERIAL,, vol. 14, no. 3, 1 June 2007 (2007-06-01), pages 266-270, XP022934709, ISSN: 1005-8850, DOI: 10.1016/S1005-8850(07)60051-6 [retrieved on 2007-06-01] * Experimental, Fig.4, Fig.5 * ----- | 1-7 | |
| X | HONGYU L ET AL: "Microstructure and Electrical Properties of Er2O3-Doped ZnO-Based Varistor Ceramics Prepared by High-Energy Ball Milling", JOURNAL OF RARE EARTHS, INTERNATIONAL ACADEMIC PUBLISHERS, BEIJING, CN, vol. 25, no. 1, 1 February 2007 (2007-02-01), pages 120-123, XP022933930, ISSN: 1002-0721, DOI: 10.1016/S1002-0721(07)60057-X [retrieved on 2007-02-01] * Experimenta, Table 1 * ----- | 1-7 | TECHNICAL FIELDS SEARCHED (IPC) C04B H01C |

The present search report has been drawn up for all claims

| Place of search | Date of completion of the search | Examiner |
|---|---|---|
| Munich | 21 March 2013 | Sala, Paolo |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

**ANNEX TO THE EUROPEAN SEARCH REPORT
ON EUROPEAN PATENT APPLICATION NO.**                    EP 12 19 3101

This annex lists the patent family members relating to the patent documents cited in the above-mentioned European search report.
The members are as contained in the European Patent Office EDP file on
The European Patent Office is in no way liable for these particulars which are merely given for the purpose of information.

21-03-2013

| Patent document cited in search report | | Publication date | Patent family member(s) | | Publication date |
|---|---|---|---|---|---|
| EP 2276042 | A2 | 19-01-2011 | CN | 101630553 A | 20-01-2010 |
| | | | EP | 2276042 A2 | 19-01-2011 |
| | | | JP | 2011040734 A | 24-02-2011 |

For more details about this annex : see Official Journal of the European Patent Office, No. 12/82